(19) Europäisches Patentamt
European Patent Office
Office européen des brevets

(11) **EP 4 535 039 A1**

(12) **EUROPEAN PATENT APPLICATION**

(43) Date of publication:
**09.04.2025 Bulletin 2025/15**

(21) Application number: **24197020.1**

(22) Date of filing: **28.08.2024**

(51) International Patent Classification (IPC):
**G01S 13/90** (2006.01)   **G01S 13/38** (2006.01)
**G01S 13/42** (2006.01)

(52) Cooperative Patent Classification (CPC):
**G01S 13/38; G01S 13/42; G01S 13/9004; G01S 13/9089**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.10.2023 IN 202321066628**

(71) Applicant: **Tata Consultancy Services Limited Maharashtra (IN)**

(72) Inventors:
• **GIGIE, ANDREW**
  **56066 Bengaluru, Karnataka (IN)**

• **ROKKAM, KRISHNA KANTH**
  **560066 Bengaluru, Karnataka (IN)**
• **KUMAR, ACHANNA ANIL**
  **560066 Bengaluru, Karnataka (IN)**
• **CHAKRAVARTY, TAPAS**
  **700091 Kolkata, West Bengal (IN)**
• **PAL, ARPAN**
  **700091 Kolkata, West Bengal (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR MICROWAVE IMAGING WITH MULTIPLE-INPUT AND MULTIPLE-OUTPUT (MIMO) SYNTHETIC APERTURE RADAR (SAR)**

(57) In Microwave radar imaging, obtaining high resolution microwave image from materials remains a challenge due to comparatively longer wavelength. Embodiments of the present disclosure provide a system for microwave imaging by Multiple-Input and Multiple-Output along with Synthetic Aperture Radar. A back-scattered signal is received from object at a target as an input. The back-scattered signal is rearranged to generate sub-array elements. A Fourier transform of the sub-array elements is computed by deploying two dimensional Fast Fourier transform to obtain two dimensional Fast Fourier transform of the sub-array elements. The 2D FFT of the sub-array elements is vectorized to obtain vectorized stacked sub-array matrix. The stacked sub band of the 2D FFT of the entire aperture array is reordered to obtain a two dimensional Fast Fourier transform of the entire aperture array. Three-dimensional reflectivity function of the target is estimated from the 2D FFT of the entire aperture array.

FIG. 2A

EP 4 535 039 A1

**Description**

CROSS-REFERENCE TO RELATED APPLICATIONS AND PRIORITY

The present application claims priority to Indian application, Application No. 202321066628, filed in India on October 04, 2023.

TECHNICAL FIELD

The disclosure herein generally relates to an image processing, and, more particularly, to method and system for microwave imaging with multiple-input and multiple-output (MIMO) synthetic aperture radar (SAR).

BACKGROUND

Microwave radar imaging possesses a capability to see through various materials, including clothing, walls, and even human tissue. The microwave radar imaging also offers additional advantages compared to other existing imaging modalities, such as nonionizing radiation, unobtrusive nature, and its ability to preserve privacy. Due to these attractive features, of-late nearfield microwave imaging particularly in a millimeter wave (mmwave) band, has found applications in numerous areas like concealed weapon detection, medical imaging, inspection of packed goods, through wall imaging, human robot interactions etc. Obtaining a high resolution microwave image remains a challenge due to its comparatively longer wavelength. To address this challenge, a Synthetic Aperture Radar (SAR) is commonly used to effectively create a larger aperture, which aids in improving the image resolution. Traditionally, a Single-Input and Single-Output (SISO) with the SAR (SISO-SAR) configuration was used in the medical imaging, the inspection of packed goods, but its significant acquisition time limited the corresponding application in many industrial settings. Recent advancements in miniaturization of the mmwave Multiple-Input and Multiple-Output (MIMO) radars, have facilitated the integration of the MIMO radars with the SAR (e.g., MIMO-SAR). This integration achieves high-resolution microwave imaging without compromising acquisition time. Typically, image formation in the MIMO-SAR is based on either Back projection Algorithm (BPA) or Range Migration Algorithm (RMA).

Although the BPA can be applied to any arbitrary MIMO radar configuration, it is computationally intensive and hence not commonly preferred in practice. On the other hand, the RMA, which is based on a Fourier Transform (FT), is widely used as Fast Fourier Transforms (FFTs) can efficiently be utilized to compute the FT. It is important to note that FFTs require uniform sampling, thus necessitating a uniform placement of array elements in the MIMO radar along with a uniform SAR trajectory. Limitations in manufacturing possess challenges in attaining precise uniformity of array elements, particularly in the mmwave band. This, in turn, has a significant impact on computation of the FTs using the FFTs and adversely affects the quality of a reconstructed image. Hence, recently Non-Uniform Fast Fourier Transform (NUFFT) has been used to address this problem of image reconstruction in non-uniform MIMO-SAR configurations. The NUFFT typically uses oversampling which in turn requires larger length FFTs to be employed. Although image quality improves compared to standard RMA, however, noticeable artifacts still persist.

SUMMARY

Embodiments of the present disclosure present technological improvements as solutions to one or more of the above-mentioned technical problems recognized by the inventors in conventional systems. For example, in one aspect, a method of estimating a three-dimensional (3D) reflectivity function of a target in a microwave imaging with a multiple-input and multiple-output (MIMO) synthetic aperture radar (SAR) is provided. The processor implemented method includes: receiving, via one or more hardware processors, one or more back-scattered signals from one or more objects at a target as an input; rearranging, via the one or more hardware processors, the one or more back-scattered signals to generate one or more sub-array element; computing, via the one or more hardware processors, a Fourier transform (FT) of the one or more sub-array elements by deploying a two dimensional (2D) Fast Fourier transform (FFT) to obtain a two dimensional (2D) Fast Fourier transform (FFT) of the one or more sub-array elements; vectorizing, via the one or more hardware processors, the 2D FFT of the one or more sub-array elements to obtain one or more vectorized sub-array matrices; reordering, via the one or more hardware processors, the stacked sub band of the 2D FFT of the entire aperture array to obtain a two dimensional (2D) Fast Fourier transform (FFT) of the entire aperture array; and estimating, via the one or more hardware processors, a three-dimensional (3D) reflectivity function of the target from the 2D FFT of the entire aperture array. The one or more back-scattered signals are received when the one or more objects at the target is scanned by one or more periodic blocks of array of sensors. The one or more back-scattered signals are stitched to form an entire aperture array. The one or more sub-array elements are visualized as translated and decimated arrays of the entire aperture array. The Fourier transform of the one or more sub-array elements are relatively equivalent to a weighted superposition of one or more sub bands of the 2D FFT of the entire aperture array. The one or more vectorized sub-array matrices are stacked to form one or more stacked sub-array matrices. The one or more stacked sub-array matrices are relatively equivalent to a stacked sub band of the 2D FFT of the entire aperture array using a precomputed weight matrix.

In an embodiment, the array of sensors corresponds to one or more multiple-input and multiple-output (MIMO) radar. In an embodiment, the one or more MIMO radar includes one or more transmitters and one or more receivers. In an embodiment, an inter element distance for one or more array elements in the one or more sub-array elements are uniform even if the inter element distance of one or more array elements of the one or more MIMO radar is uniform or nonuniform. In an embodiment, the one or more sub-array elements are generated by combining corresponding individual array elements across the one or more periodic blocks. In an embodiment, the precomputed weight matrix is obtained by one or more phase relationships of one or more spatial array elements. In an embodiment, the one or more phase relationships corresponds to a spatial shift with respect to a reference element. In an embodiment, the one or more spatial array elements corresponds to one or more positions of the one or more array elements in the at least one MIMO radar. In an embodiment, the stacked sub band of the 2D FFT of the entire aperture array are computed by multiplying an inverted precomputed weight matrix with the one or more stacked sub-array matrices.

In another aspect, there is provided a system for a microwave imaging with a multiple-input and multiple-output (MIMO) synthetic aperture radar (SAR). The system includes a memory storing instructions; one or more communication interfaces; and one or more hardware processors coupled to the memory via the one or more communication interfaces, wherein the one or more hardware processors are configured by the instructions to: receive, one or more back-scattered signals from at least one object at a target as an input; rearrange, the one or more back-scattered signals to generate one or more sub-array element; compute, a Fourier transform (FT) of the one or more sub-array elements by deploying a two dimensional (2D) Fast Fourier transform (FFT) to obtain a two dimensional (2D) Fast Fourier transform (FFT) of the one or more sub-array elements; vectorize, the 2D FFT of the one or more sub-array elements to obtain one or more vectorized sub-array matrices; reorder, the stacked sub band of the 2D FFT of the entire aperture array to obtain a two dimensional (2D) Fast Fourier transform (FFT) of the entire aperture array; and estimate, a three-dimensional (3D) reflectivity function of the target from the 2D FFT of the entire aperture array. The one or more back-scattered signals are received when the at least one object at the target is scanned by one or more periodic blocks of array of sensors. The one or more back-scattered signals are stitched to form an entire aperture array. The one or more sub-array elements are visualized as translated and decimated arrays of the entire aperture array. The Fourier transform of the one or more sub-array elements are relatively equivalent to a weighted superposition of one or more sub bands of the 2D FFT of the entire aperture array. The one or more vectorized sub-array matrices are stacked to form one or more stacked sub-array matrices. The one or more stacked sub-array matrices are relatively equivalent to a stacked sub band of the 2D FFT of the entire aperture array using a precomputed weight matrix.

In an embodiment, the array of sensors corresponds to at least one multiple-input and multiple-output (MIMO) radar. In an embodiment, the at least one MIMO radar includes one or more transmitters and one or more receivers. In an embodiment, an inter element distance for at least one array element in the one or more sub-array elements are uniform even if the inter element distance of one or more array elements of the at least one MIMO radar is uniform or nonuniform. In an embodiment, the one or more sub-array elements are generated by combining corresponding individual array elements across the one or more periodic blocks. In an embodiment, the precomputed weight matrix is obtained by one or more phase relationships of one or more spatial array elements. In an embodiment, the one or more phase relationships corresponds to a spatial shift with respect to a reference element. In an embodiment, the one or more spatial array elements corresponds to one or more positions of the one or more array elements in the at least one MIMO radar. In an embodiment, the stacked sub band of the 2D FFT of the entire aperture array are computed by multiplying an inverted precomputed weight matrix with the one or more stacked sub-array matrices.

In yet another aspect, there are provided one or more non-transitory machine readable information storage mediums comprising one or more instructions which when executed by one or more hardware processors causes: receiving, one or more back-scattered signals from at least one object at a target as an input; rearranging, the one or more back-scattered signals to generate one or more sub-array element; computing, a Fourier transform (FT) of the one or more sub-array elements by deploying a two dimensional (2D) Fast Fourier transform (FFT) to obtain a two dimensional (2D) Fast Fourier transform (FFT) of the one or more sub-array elements; vectorizing, the 2D FFT of the one or more sub-array elements to obtain one or more vectorized sub-array matrices; reordering, the stacked sub band of the 2D FFT of the entire aperture array to obtain a two dimensional (2D) Fast Fourier transform (FFT) of the entire aperture array; and estimating, a three-dimensional (3D) reflectivity function of the target from the 2D FFT of the entire aperture array. The one or more back-scattered signals are received when the at least one object at the target is scanned by one or more periodic blocks of array of sensors. The one or more back-scattered signals are stitched to form an entire aperture array. The one or more sub-array elements are visualized as translated and decimated arrays of the entire aperture array. The Fourier transform of the one or more sub-array elements are relatively equivalent to a weighted superposition of one or more sub bands of the 2D FFT of the entire aperture array. The one or more vectorized sub-array matrices are stacked to form one or more stacked sub-array matrices. The one or more stacked sub-array matrices are relatively equivalent to a stacked sub band of the 2D FFT of the entire aperture array using a precomputed weight matrix.

In an embodiment, the array of sensors corresponds to at least one multiple-input and multiple-output (MIMO) radar. In an embodiment, the at least one MIMO radar includes one or more transmitters and one or more receivers. In an embodiment, an inter element distance for at least one array element in the one or more sub-array elements are uniform even if the inter element distance of one or more array elements of the at least one MIMO radar is uniform or nonuniform. In an embodiment, the one or more sub-array elements are generated by combining corresponding individual array elements across the one or more periodic blocks. In an embodiment, the precomputed weight matrix is obtained by one or more phase relationships of one or more spatial array elements. In an embodiment, the one or more phase relationships corresponds to a spatial shift with respect to a reference element. In an embodiment, the one or more spatial array elements corresponds to one or more positions of the one or more array elements in the at least one MIMO radar. In an embodiment, the stacked sub band of the 2D FFT of the entire aperture array are computed by multiplying an inverted precomputed weight matrix with the one or more stacked sub-array matrices.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for a microwave imaging with a multiple-input and multiple-output (MIMO) synthetic aperture radar (SAR), according to an embodiment of the present disclosure.

FIG. 2A is an exemplary block diagram of the system of FIG. 1 implementing the MIMO-SAR in the microwave imaging, according to an embodiment of the present disclosure.

FIG. 2B illustrates an exemplary schematic diagram illustrating one or more locations of one or more non-uniform array elements, according to an embodiment of the present disclosure.

FIG. 3 is an exemplary flow diagram illustrating method of estimating a three-dimensional reflectivity function of a target in the microwave imaging with the MIMO-SAR, according to an embodiment of the present disclosure.

FIG. 4A is an exemplary graphical representation illustrating an experimental ground truth optical image for three targets, according to an embodiment of the present disclosure.

FIGS. 4B through 4D are exemplary graphical representations illustrating experimental comparative results of reconstructed the image obtained by implementing Standard-RMA, NUFFT-RMA, and the proposed approach respectively, according to an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need for an efficient approach to address the problem of image reconstruction in non-uniform MIMO-SAR configurations. Embodiments of the present disclosure provide a system for a microwave imaging with a multiple-input and multiple-output (MIMO) along with a synthetic aperture radar (SAR). The microwave imaging corresponds but is not limited to (a) a near-field imaging, and (b) a far-field imaging. The proposed approach leverages a periodic block scanning of the MIMO radars in the RMA to create uniformly spaced multiple sub-arrays. The sub-arrays are formed by combining corresponding elements across the periodic block scan, and the elements in the sub-arrays are uniformly spaced despite the non-uniformity of the MIMO radar. By visualizing them as decimated and translated versions of a larger array, a closed-form expression connecting their Fourier transforms (FT) and the FT of the larger non-uniform array is derived. The embodiments of present disclosure estimates three-dimensional reflectivity function of the target in the microwave imaging.

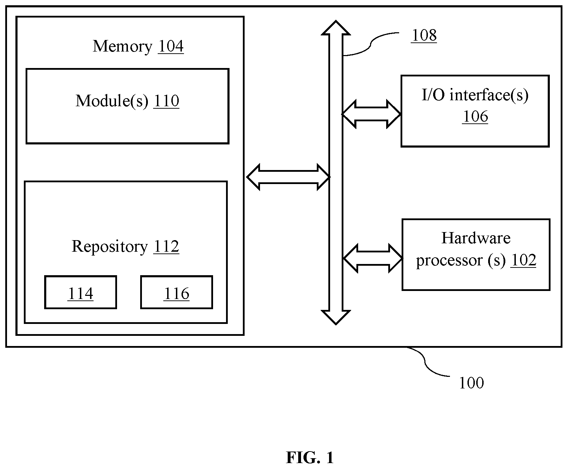

Referring now to the drawings, and more particularly to FIGS. 1 through 4D, where similar reference characters denote corresponding features consistently throughout the figures, there are shown preferred embodiments, and these embodiments are described in the context of the following exemplary system and/or method.

FIG. 1 illustrates a system 100 for a microwave imaging with a multiple-input and multiple-output (MIMO), a synthetic aperture radar (SAR), according to an embodiment of the present disclosure. In an embodiment, the system 100 includes one or more processor(s) 102, communication interface device(s) or input/output (I/O) interface(s) 106, and one or more data storage devices or memory 104 operatively coupled to the one or more processors 102. The memory 104 includes a database. The one or more processor(s) processor 102, the memory 104, and the I/O interface(s) 106 may be coupled by a system bus such as a bus 108 or a similar mechanism. The system 100 is further connected to a radar and antenna unit (Not shown in figure) via the I/O interface(s) 106. The one or more processor(s) 102 that are hardware processors can be implemented as one or more microprocessors, microcomputers, microcontrollers, digital signal processors, central processing units, state machines, logic circuitries, and/or any devices that manipulate signals based on operational instructions. Among other capabilities, the one or more processor(s) 102 is configured to fetch and execute computer-readable instructions stored in the memory 104. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like. The I/O interface device(s) 106 may include a variety of software and hardware interfaces, for example, interfaces for peripheral device(s), such as a keyboard, a mouse, an external memory, a camera device, and a printer. Further, the I/O interface device(s) 106 may enable the system 100 to communicate with other devices, such as web servers and external databases. The I/O interface device(s) 106 can facilitate multiple communications within a wide variety of networks and protocol types, including wired networks, for example, local area network (LAN), cable, etc., and wireless networks, such as Wireless LAN (WLAN), cellular, or satellite. In an embodiment, the I/O interface device(s) 106 can include one or more ports for connecting number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 110 and a repository 112 for storing data processed, received, and generated by the plurality of modules 110. The plurality of modules 110 may include routines, programs, objects, components, data structures, and so on, which perform particular tasks or implement particular abstract data types.

Further, the database stores information pertaining to inputs fed to the system 100 and/or outputs generated by the system (e.g., data/output generated at each stage of the data processing) 100, specific to the methodology described herein. More specifically, the database stores information being processed at each step of the proposed methodology.

Additionally, the plurality of modules 110 may include programs or coded instructions that supplement applications and functions of the system 100. The repository 112, amongst other things, includes a system database 114 and other data 116. The other data 116 may include data generated as a result of the execution of one or more modules in the plurality of modules 110. Further, the database stores information pertaining to inputs fed to the system 100 and/or outputs generated by the system (e.g., at each stage), specific to the methodology described herein. Herein, the memory for example the memory 104 and the computer program code configured to, with the hardware processor for example the processor 102, causes the system 100 to perform various functions described herein under.

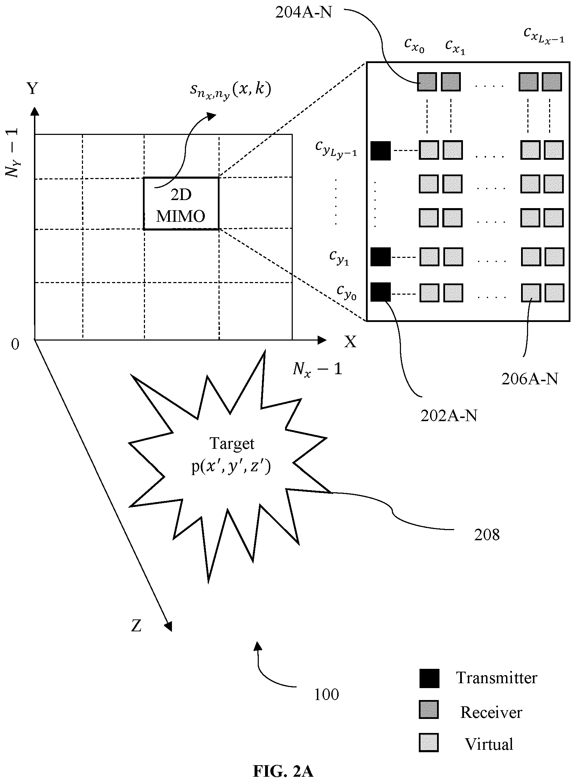

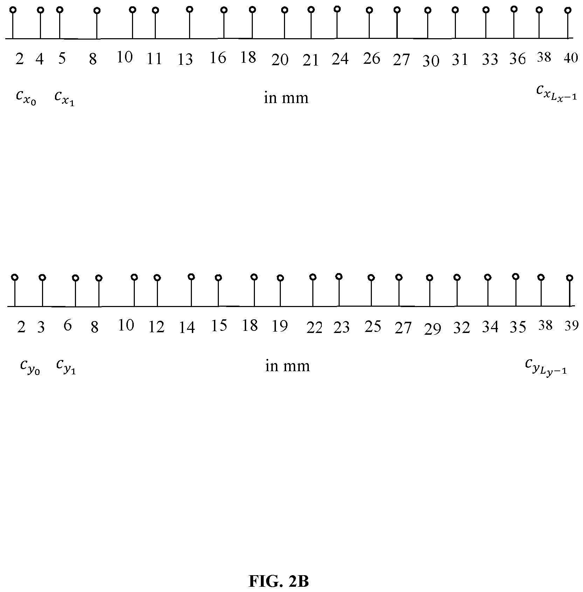

FIG. 2A is an exemplary block diagram of the system 100 of FIG. 1 implementing the MIMO-SAR in the microwave imaging, according to an embodiment of the present disclosure. The system 100 includes the multiple-input and multiple-output (MIMO) and a synthetic aperture radar (SAR) i.e., the MIMO-SAR. The MIMO-SAR includes one or more transmitters 202A-N, one or more receivers 204AN, one or more virtual element 206A-N, and a target 208. The MIMO-SAR with a linear array of transmitters 202A-N and the one or more receivers 204A-N are placed orthogonally which provides a rectangular array of $L_x \times L_y$ virtual array elements 206A-N. In an embodiment, the MIMO radar corresponds to a two dimensional (2D) MIMO radar. FIG. 2B illustrates an exemplary schematic diagram illustrating one or more locations of one or more non-uniform array elements, according to an embodiment of the present disclosure. The MIMO radar is configured to scan one or more periodic blocks of one or more objects at the target 208 to obtain one or more backscattered signals. The one or more back-scattered signals are stitched to form an entire aperture array. The received one or more back-scattered signals by one or more sub-array elements located at $\vec{x} = (x, y)$ can be expressed as s $(\vec{x}, k)$:

$$s(\vec{x}, k) = \iiint p(x', y', z') e^{-j2kR} dx\,dy\,dz \qquad (1)$$

where p (x', y', z') denote a three-dimensional (3D) target reflectivity function of a scene or the target 208, R is distance between the array element and one or more points of the target 208 in the three dimension (3D), and k denotes a wave number.

Let $C = C_x \times C_y$ here denotes one or more locations of the array elements, where

$C_x = \{c_{x_0}, c_{x_1}, \ldots c_{x_{L_x-1}}\}$, and $C_y = \{c_{y_0}, c_{y_1}, \ldots c_{y_{L_y-1}}\}$, and where '$\times$' denotes a cartesian product of two sets. In the MIMO-SAR, measurements s $(\vec{x}, k)$ is taken by a periodical block wise scanning which can be expressed as:

$$s\left(\vec{x},\mathrm{k}\right) = \underbrace{\left\{s\left(n_x\left(c_{x_{L_x-1}} + c_{x_1}\right) + C_x, n_y\left(c_{y_{L_y-1}} + c_{y_1}\right) + C_y, k\right)\right\}}_{s_{n_x,n_y}(\vec{x},\mathrm{k})} \qquad (2)$$

$$0 \leq n_x \leq N_x - 1, 0 \leq n_y \leq N_y - 1,$$

where $N_x$ and $N_y$ denotes the number of periodical block scans along the x and y axes respectively.

The one or more backscattered signals are rearranged to generate one or more sub-array elements. The one or more sub-array elements are visualized as translated and decimated arrays of the entire aperture array. The one or more sub-array elements are generated by combining corresponding individual array elements across the one or more periodic blocks. In an embodiment, an inter element distance of the one or more array elements of the one or more sub-arrays are uniform even if the inter element distance of array elements of a two dimensional (2D) MIMO radar is uniform or nonuniform. The one or more sub-array elements are formed for any $0 \leq l_x \leq L_x$ - 1, $0 \leq l_y \leq L_y$ - 1 as,

$$s_{l_x,l_y}\left(\vec{x},k\right) = s(\boldsymbol{L}\vec{x} + c_{l_x,l_y}, k) \qquad (3)$$

where $c_{l_x,l_y} = [c_{x_{l_x}}, c_{y_{l_y}}]^T$ and the factor $\mathsf{L}$ = diag $\{L_x, L_y\}$.

The sensor array elements in $s_{n_x,n_y}(\vec{x}, k)$ may be non-uniform, the measurements $s_{l_x,l_y}(\vec{x}, k)$ for any $l_x, l_y$, are uniformly spaced due to two dimensional (2D) periodic scanning. The effect of L and $c_{l_x,l_y}$, makes the sub-array elements represented by $s_{l_x,l_y}(\vec{x}, k)$ to resemble as the processes of decimation and translation of the entire aperture array. A Fourier transform of the one or more sub-array elements are computed by deploying a two dimensional (2D) Fast Fourier transform (FFT) to obtain a two dimensional (2D) Fast Fourier transform (FFT) of the one or more sub-array elements. The two dimensional Fast Fourier transform (FFT) is applied on $s_{l_x,l_y}(\vec{x}, k)$ to compute corresponding Fourier transform of $S_{l_x,l_y}(\vec{k}, k)$, where $\vec{k}$ denotes $(k_x, k_y)$. The aliased $S_{l_x,l_y}(\vec{k}, k)$ are relatively equivalent to a weighted superposition of one or more sub bands of the 2D FFT of the entire aperture array, and expressed as:

$$S_{l_x,l_y}\left(\vec{k},k\right) = \frac{1}{L_x L_y}e^{-j2\pi c_{l_x,l_y}\vec{k}}\sum_{q=0}^{|\Lambda|}e^{j2\pi c_{l_x,l_y}L^{-1}\lambda_q}\,S(\vec{k} + L^{-1}\lambda_q, k) \qquad (4)$$

where $\lambda_q$ denotes the q$^{th}$ element of the set A = {0, 1, ......, $L_x$ - 1} $\times$ {0, 1, ......, $L_y$ - 1}. $S(\vec{k} + L^{-1}\lambda_q, k)$ denotes the sub-band of $S(\vec{k}, k)$ of dimension $N_x \times N_y$ beginning from the position diag $\{N_x, N_y\}\lambda_q$. The $S(\vec{k}, k)$ denotes the 2D FFT of the entire aperture array. The 2D FFT of the one or more sub-array elements is vectorized to obtain one or more vectorized sub-array matrices. The one or more vectorized sub-array matrices are stacked to form one or more stacked sub-array matrices which is represented as: 

$$S_l(\vec{k}, k) \triangleq [S_{0,0}(\vec{k}, k), S_{0,1}(\vec{k}, k), \dots\dots S_{L_x-1,L_y-1}(\vec{k}, k)]^T$$

. Let the stacked sub-bands of the 2D FFT of the entire aperture array be represented by

$$S_{sb}(\vec{k}, k) \triangleq [(S(\vec{k} + \mathrm{L}^{-1}\lambda_0, \mathrm{k}), \mathrm{S}(\vec{k} + \mathrm{L}^{-1}\lambda_1, \mathrm{k}), \dots\dots \mathrm{S}(\vec{k} + \mathrm{L}^{-1}\lambda_{|\Lambda|}, \mathrm{k})]^T$$

and

$$\Delta(\vec{k}) \triangleq diag\{e^{-j2\pi c_{0,0}\vec{k}}, e^{-j2\pi c_{0,1}\vec{k}}, \dots\dots, e^{-j2\pi c_{L_x-1,L_y-1}\vec{k}}\}$$

.

Thus, the one or more stacked sub array matrices are relatively equivalent to a stacked sub band of the 2D FFT of the entire aperture array using a precomputed weight matrix, and can be expressed as $S_l(\vec{k}, k)$:

$$S_l\left(\vec{k}, k\right) = \frac{1}{L_x L_y}\Delta(\vec{k})\,AS_{sb}\left(\vec{k}, k\right) \qquad (5)$$

where A is a square matrix of size $L_x L_y \times L_x L_y$ and represents the precomputed weight matrix. Any (l, q)$^{th}$ element, $1 \leq l, q \leq L_x L_y$ of A is given as $[A]_{l,q} = e^{j2\pi c_{l_x,l_y}^T L^{-1}\lambda_q}$. The precomputed weight matrix is obtained by one or more phase relationships of one or more spatial array elements. The one or more phase relationships corresponds to a spatial shift with respect to a reference element. The reference elements corresponds to the target reflectivity function acquired by the MIMO radar at one of the periodic blocks. In an embodiment, the one or more spatial array elements corresponds to one or more positions of the one or more array elements in the at least one MIMO radar.

In an embodiment, $S_l(\vec{k}, k)$ are computed using the 2D FFTs, $\Delta(\vec{k})$ and A are pre-computed with a knowledge of $C_x$ and $C_y$ i.e., calibration is used to determine the exact array locations. The stacked sub-band of the 2D FFT of the entire aperture array represented by $S_{sb}(\vec{k}, k)$ which can be computed by rearranging the equation 5 and multiplying the inverted precomputed weight matrix with the one or more stacked sub array matrices. A two dimensional (2D) FFT of the entire aperture array represented by $S(\vec{k}, k)$ which is obtained by reordering the stacked sub-band of the 2D FFT of the entire aperture array.

The computed 2D FFT of the entire aperture array is utilized to estimate the three-dimensional (3D) reflectivity function of the target 208 i.e., the 3D target reflectivity p (x ', y', z') is obtained based on the estimated $S(\vec{k}, k)$ for nonuniform MIMO-SAR. The 3D target reflectivity p (x ', y', z'):

$$p( x', y', z') = \mathrm{IFT}_{3D}^{(k_x, k_y, k_z)}[e^{-jk_z Z_0} S (\vec{k}, k_z)] \qquad (6)$$

where $\mathrm{IFT}_{3D}$ denotes a 3D inverse FT and $Z_0$ denotes the distance between the scanned and target plane along z dimension.

In an embodiment, each image of the one or more objects at the target are reconstructed based on the estimated three-dimensional reflectivity function. In an embodiment, the formation of sub-array and estimation of $S(\vec{k}, k)$ closely resembles a multi-coset (MC) sampling and recovery framework.

In an embodiment, the dimensions of s $(\vec{x}, k)$ and $s_{l_x, l_y}(\vec{x}, k)$ for all $\vec{x}$ and for a given k are $L_x N_x \times L_y N_y$ and $N_x \times N_y$ respectively. The $S_{l_x, l_y}(k', k)$ is computed by 2D FFT requires approximately $\mathcal{O}(N_x N_y (\log(N_x) + \log(N_y)))$. Additionally, $L_x L_y$ for which 2D FFTs have to be computed to obtain $S_l(\vec{k}, k)$ in parallel. In another embodiment, Non-Uniform Fast Fourier Transform (NUFFT) is employed then the complexity is $\mathcal{O}(mL_x L_y N_x N_y (\log(mL_x N_x) + \log(mL_y N_y)))$, where m is an oversampling factor and m > 2, hence, a considerably lower order FFT computation is required.

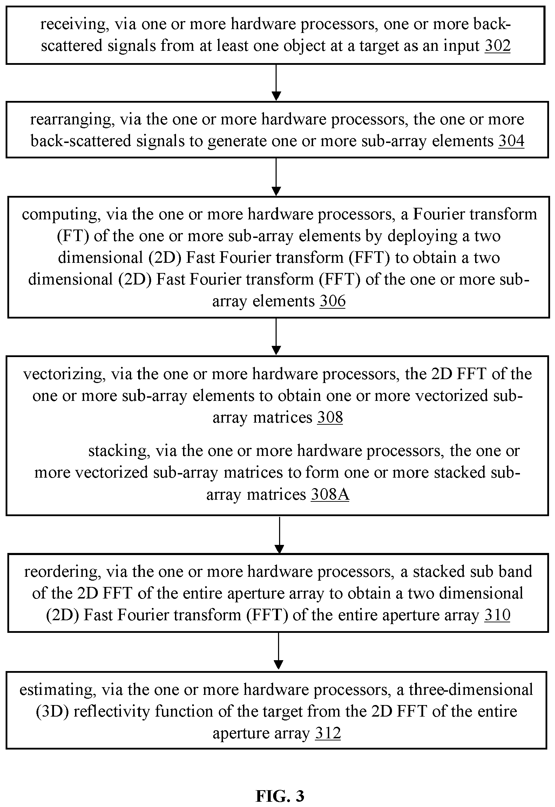

FIG. 3 is an exemplary flow diagram illustrating method 300 of estimating the three-dimensional reflectivity function of the target in the microwave imaging with the MIMO-SAR, according to an embodiment of the present disclosure. In an embodiment, the system 100 comprises one or more data storage devices or the memory 104 operatively coupled to the one or more hardware processors 102 and is configured to store instructions for execution of steps of the method by the one or more processors 102. The flow diagram depicted is better understood by way of following explanation/description. The steps of the method of the present disclosure will now be explained with reference to the components of the system as depicted in FIGS. 1 and 2A.

At step 302, one or more back-scattered signals is received from one or more objects at a target as an input. The one or more back-scattered signals are received when the at least one object at the target is scanned by one or more periodic blocks of array of sensors. The one or more back-scattered signals are stitched to form an entire aperture array. In an embodiment, the array of sensors corresponds to the multiple-input and multiple-output (MIMO) radar. In an embodiment, the MIMO radar includes one or more transmitters and one or more receivers. In an embodiment, an inter element distance for at least one array element in the one or more sub-array elements are uniform even if the inter element distance of one or more array elements of the at least one MIMO radar is uniform or nonuniform. At step 304, the one or more back-scattered signals are rearranged to generate one or more sub-array elements. The one or more sub-array elements are visualized as translated and decimated arrays of the entire aperture array. In an embodiment, the one or more sub-array elements are generated by combining corresponding individual array elements across the one or more periodic blocks.

At step 306, a Fourier transform (FT) of the one or more sub-array elements is computed by deploying a two dimensional (2D) Fast Fourier transform (FFT) to obtain a two dimensional (2D) Fast Fourier transform (FFT) of the one or more sub-array elements. The Fourier transform of the one or more sub-array elements are relatively equivalent to a weighted superposition of one or more sub bands of the 2D FFT of the entire aperture array. At step 308, the 2D FFT of the one or more sub-array elements vectorized to obtain one or more vectorized sub-array matrices. The one or more vectorized sub-array matrices are stacked to form one or more stacked sub-array matrices. The one or more stacked sub-array matrices are relatively equivalent to a stacked sub band of the 2D FFT of the entire aperture array using a precomputed weight matrix. In an embodiment, the precomputed weight matrix is obtained by at least one phase relationship of one or more spatial array elements. The one or more phase relationships corresponds to the spatial shift with respect to the reference element. The reference elements corresponds to the target reflectivity function acquired by the MIMO radar at one of the periodic blocks. In an embodiment, the one or more spatial array elements corresponds to one or more positions of the one or more array elements in the at least one MIMO radar. At step 310, the stacked sub band of the 2D FFT of the entire aperture array are reordered to obtain a two dimensional (2D) Fast Fourier transform (FFT) of the entire aperture array. In an embodiment, the stacked sub band of the 2D FFT of the entire aperture array are computed by multiplying an inverted precomputed weight matrix with the one or more stacked sub-array matrices. At step 312, a three-dimensional (3D) reflectivity function of the target is estimated from the 2D FFT of the entire aperture array.

**Experimental results:**

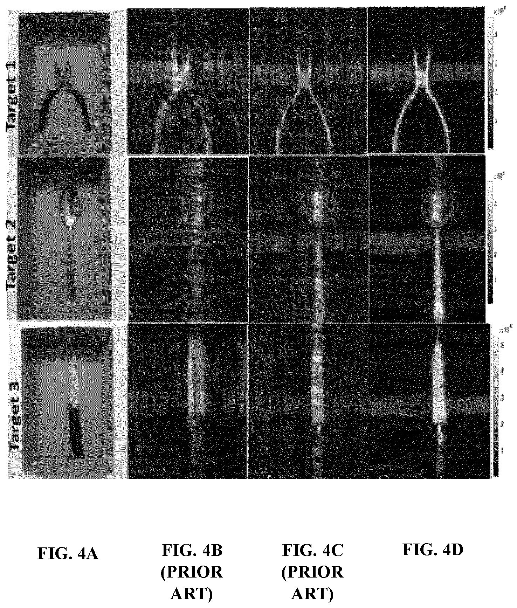

For example, a study is conducted to validate effectiveness of the proposed method in comparison to state-of-the-art techniques. With reference to FIG. 4A is an exemplary graphical representation illustrating experimental ground truth optical image for three targets, according to an embodiment of the present disclosure. FIGS. 4B-4D are exemplary graphical representations illustrating an experimental comparative results of reconstructed the image obtained by implementing Standard-RMA, NUFFT-RMA, and the proposed method respectively, according to an embodiment of the present disclosure. The experimental setup resembles the configuration which consists of a MIMO radar mounted on a 2- D mechanical scanner. The MIMO radar includes a non-uniform linear array with 20 transmit antennas and 20 receive antennas, positioned along the x and y axes, respectively. The locations of the 20 non-uniform linear array elements, i.e., $C_x$ and $C_y$, which results in a virtual array of dimensions $L_x = 20$ and $L_y = 20$. Further, in the experiments, a stepped frequency continuous wave radar operating in a 62 - 69 GHz band with 150 uniformly spaced frequencies (i.e., k-domain dimension of 150) is utilized. The MIMO radar is block wise periodically scanned in 2-D for $N_x = 5$ and $N_y = 5$. With this experimental configuration, the dimension of $s_{n_x,n_y}(\vec{x}, k)$, $s_{l_x,l_y}(\vec{x}, k)$ and $s(\vec{x}, k)$ may be $20 \times 20$, $5 \times 5$ and $100 \times 100$ respectively for a given k. Three targets as shown in FIG. 4a are considered, which was placed in a box and kept at a distance of $Z_0 = 22cm$. The proposed method is compared against two other techniques namely; (i) Standard-RMA - where standard 2-D FFTs are employed, (ii) NUFFT-RMA with an oversampling factor of m = 3. The standard-RMA technique requires a 2-D FFT of size $100 \times 100$, while NUFFT-RMA involves additional operations such as oversampling and interpolation, resulting in a larger 2-D FFT size of $300 \times 300$. In contrast, the proposed method requires 400 2-D FFTs, but each FFT includes a dimension of only $5 \times 5$ and the 400 FFTs can be executed in parallel.

FIGS. 4B through 4D, which presents the visual results obtained using the standard-RMA, the NUFFT-RMA, and the proposed approach for the three targets respectively. The performance of the standard-RMA is adversely affected by non-uniformity, whereas noticeable improvement is observed with the NUFFT-RMA. However, periodic artifacts can still be observed with NUFFT-RMA, possibly due to the periodic scanning with non-uniform elements. In contrast, the proposed approach achieves significantly better reconstruction results without any artifacts, surpassing the other approaches, thus making an appealing choice for the microwave MIMO-SAR RMA imaging.

The embodiments of present disclosure herein addresses unresolved problem of microwave MIMO-SAR imaging with non-uniform MIMO radar. Embodiments of the present disclosure provide a system for the microwave imaging by the Multiple-Input and Multiple-Output (MIMO) along with the Synthetic Aperture Radar (SAR). The embodiments of present disclosure estimates the three-dimensional reflectivity function of the target in the microwave imaging. The embodiment thus utilizes elements of the non-uniform MIMO SAR from the one or more periodic blocks which makes computationally efficient algorithm for non-uniform arrays to perform an image reconstruction. Unlike existing methods, the proposed approach requires computation of smaller dimensional FFTs which makes more deployment friendly and computationally efficient. Faster computation using non-uniform arrays by leveraging periodic SAR motion. In the proposed approach, periodicity in the SAR scanning is harnessed and the sub-arrays formed because of the SAR scan is uniform and hence FFT can be employed and the FFT for large non-uniform array is derived. By leveraging the periodic scanning of MIMO radar for the RMA, the larger array was decomposed into multiple uniformly spaced sub-arrays by combining the corresponding elements across the scans. Using a closed form relationship, the FT of the larger non-uniform array is estimated using the FT (i.e., using FFTs) of the smaller dimensional sub-arrays providing a computationally efficient alternative for RMA-based SAR imaging. Experimental results demonstrates the superior image reconstruction by the proposed approach with a reduced computation compared to existing state-of-art RMA approach.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), comprising:

   receiving (302), via one or more hardware processors, one or more back-scattered signals from at least one object at a target as an input, wherein the one or more back-scattered signals are received when the at least one object at the target is scanned by one or more periodic blocks of array of sensors, and wherein the one or more back-scattered signals are stitched to form an entire aperture array;
   rearranging (304), via the one or more hardware processors, the one or more back-scattered signals to generate one or more sub-array elements, wherein the one or more sub-array elements are visualized as translated and decimated arrays of the entire aperture array;
   computing (306), via the one or more hardware processors, a Fourier transform (FT) of the one or more sub-array elements by deploying a two dimensional (2D) Fast Fourier transform (FFT) to obtain a two dimensional (2D) Fast Fourier transform (FFT) of the one or more sub-array elements, wherein the Fourier transform of the one or more sub-array elements are relatively equivalent to a weighted superposition of one or more sub bands of the 2D FFT of the entire aperture array;
   vectorizing (308), via the one or more hardware processors, the 2D FFT of the one or more sub-array elements to obtain one or more vectorized sub-array matrices, wherein the one or more vectorized sub-array matrices are stacked to form one or more stacked sub-array matrices, and wherein the one or more stacked sub-array matrices are relatively equivalent to a stacked sub band of the 2D FFT of the entire aperture array using a precomputed weight matrix;
   reordering (310), via the one or more hardware processors, the stacked sub band of the 2D FFT of the entire aperture array to obtain a two dimensional (2D) Fast Fourier transform (FFT) of the entire aperture array; and
   estimating (312), via the one or more hardware processors, a three-dimensional (3D) reflectivity function of the target from the 2D FFT of the entire aperture array.

2. The processor implemented method (300) as claimed in claim 1, wherein the array of sensors corresponds to at least one multiple-input and multiple-output (MIMO) radar, wherein the at least one MIMO radar comprises one or more transmitters and one or more receivers, and wherein an inter element distance for at least one array element in the one or more sub-array elements are uniform even if the inter element distance of one or more array elements of the at least one MIMO radar is uniform or nonuniform.

3. The processor implemented method (300) as claimed in claim 1, wherein the one or more sub-array elements are generated by combining corresponding individual array elements across the one or more periodic blocks.

4. The processor implemented method (300) as claimed in claim 1, wherein the precomputed weight matrix is obtained by at least one phase relationship of one or more spatial array elements, wherein the at least one phase relationship corresponds to a spatial shift with respect to a reference element, and wherein the one or more spatial array elements corresponds to one or more positions of the one or more array elements in the at least one MIMO radar.

5. The processor implemented method (300) as claimed in claim 1, wherein the stacked sub band of the 2D FFT of the entire aperture array are computed by multiplying an inverted precomputed weight matrix with the one or more stacked sub-array matrices.

6. A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

receive, one or more back-scattered signals from at least one object at a target as an input, wherein the one or more back-scattered signals are received when the at least one object at the target is scanned by one or more periodic blocks of array of sensors, and wherein the one or more back-scattered signals are stitched to form an entire aperture array;
rearrange, the one or more back-scattered signals to generate one or more sub-array elements, wherein the one or more sub-array elements are visualized as translated and decimated arrays of the entire aperture array;
compute, a Fourier transform (FT) of the one or more sub-array elements by deploying a two dimensional (2D) Fast Fourier transform (FFT) to obtain a two dimensional (2D) Fast Fourier transform (FFT) of the one or more sub-array elements, wherein the Fourier transform of the one or more sub-array elements are relatively equivalent to a weighted superposition of one or more sub bands of the 2D FFT of the entire aperture array;
vectorize, the 2D FFT of the one or more sub-array elements to obtain one or more vectorized sub-array matrices, wherein the one or more vectorized sub-array matrices are stacked to form one or more stacked sub-array matrices, and wherein the one or more stacked sub-array are relatively equivalent to a stacked sub band of the 2D FFT of the entire aperture array using a precomputed weight matrix;
reorder, the stacked sub bands of the 2D FFT of the entire aperture array to obtain a two dimensional (2D) Fast Fourier transform (FFT) of the entire aperture array; and
estimate, a three-dimensional (3D) reflectivity function of the target from the 2D FFT of the entire aperture array.

7. The system (100) as claimed in claim 6, wherein the array of sensors corresponds to at least one multiple-input and multiple-output (MIMO) radar, wherein the at least one MIMO radar comprises one or more transmitters and one or more receivers, and wherein an inter element distance for at least one array element in the one or more sub-array elements are uniform even if the inter element distance of one or more array elements of the at least one MIMO radar is uniform or nonuniform.

8. The system (100) as claimed in claim 6, wherein the one or more sub-array elements are generated by combining corresponding individual array elements across the one or more periodic blocks.

9. The system (100) as claimed in claim 6, wherein the precomputed weight matrix is obtained by at least one phase relationship of one or more spatial array elements, wherein the at least one phase relationship corresponds to a spatial shift with respect to a reference element, and wherein the one or more spatial array elements corresponds to one or more positions of the one or more array elements in the at least one MIMO radar.

10. The system (100) as claimed in claim 6, wherein the stacked sub band of the 2D FFT of the entire aperture array are computed by multiplying an inverted precomputed weight matrix with the one or more stacked sub-array matrices.

11. One or more non-transitory machine-readable information storage mediums comprising one or more instructions which when executed by one or more hardware processors cause:

receiving one or more back-scattered signals from at least one object at a target as an input, wherein the one or more back-scattered signals are received when the at least one object at the target is scanned by one or more periodic blocks of array of sensors, and wherein the one or more back-scattered signals are stitched to form an entire aperture array;

rearranging the one or more back-scattered signals to generate one or more sub-array elements, wherein the one or more sub-array elements are visualized as translated and decimated arrays of the entire aperture array;

computing a Fourier transform (FT) of the one or more sub-array elements by deploying a two dimensional (2D) Fast Fourier transform (FFT) to obtain a two dimensional (2D) Fast Fourier transform (FFT) of the one or more sub-array elements, wherein the Fourier transform of the one or more sub-array elements are relatively equivalent to a weighted superposition of one or more sub bands of the 2D FFT of the entire aperture array;

vectorizing the 2D FFT of the one or more sub-array elements to obtain one or more vectorized sub-array matrices, wherein the one or more vectorized sub-array matrices are stacked to form one or more stacked sub-array matrices, and wherein the one or more stacked sub-array matrices are relatively equivalent to a stacked sub band of the 2D FFT of the entire aperture array using a precomputed weight matrix;

reordering the stacked sub band of the 2D FFT of the entire aperture array to obtain a two dimensional (2D) Fast Fourier transform (FFT) of the entire aperture array; and

estimating a three-dimensional (3D) reflectivity function of the target from the 2D FFT of the entire aperture array.

12. The one or more non-transitory machine-readable information storage mediums as claimed in claim 11, wherein the array of sensors corresponds to at least one multiple-input and multiple-output (MIMO) radar, wherein the at least one MIMO radar comprises one or more transmitters and one or more receivers, and wherein an inter element distance for at least one array element in the one or more sub-array elements are uniform even if the inter element distance of one or more array elements of the at least one MIMO radar is uniform or nonuniform.

13. The one or more non-transitory machine-readable information storage mediums as claimed in claim 11, wherein the one or more sub-array elements are generated by combining corresponding individual array elements across the one or more periodic blocks.

14. The one or more non-transitory machine-readable information storage mediums as claimed in claim 11, wherein the precomputed weight matrix is obtained by at least one phase relationship of one or more spatial array elements, wherein the at least one phase relationship corresponds to a spatial shift with respect to a reference element, and wherein the one or more spatial array elements corresponds to one or more positions of the one or more array elements in the at least one MIMO radar.

15. The one or more non-transitory machine-readable information storage mediums as claimed in claim 11, wherein the stacked sub band of the 2D FFT of the entire aperture array are computed by multiplying an inverted precomputed weight matrix with the one or more stacked sub-array matrices.

**FIG. 1**

FIG. 2A

FIG. 2B

receiving, via one or more hardware processors, one or more back-scattered signals from at least one object at a target as an input <u>302</u>

rearranging, via the one or more hardware processors, the one or more back-scattered signals to generate one or more sub-array elements <u>304</u>

computing, via the one or more hardware processors, a Fourier transform (FT) of the one or more sub-array elements by deploying a two dimensional (2D) Fast Fourier transform (FFT) to obtain a two dimensional (2D) Fast Fourier transform (FFT) of the one or more sub-array elements <u>306</u>

vectorizing, via the one or more hardware processors, the 2D FFT of the one or more sub-array elements to obtain one or more vectorized sub-array matrices <u>308</u>

stacking, via the one or more hardware processors, the one or more vectorized sub-array matrices to form one or more stacked sub-array matrices <u>308A</u>

reordering, via the one or more hardware processors, a stacked sub band of the 2D FFT of the entire aperture array to obtain a two dimensional (2D) Fast Fourier transform (FFT) of the entire aperture array <u>310</u>

estimating, via the one or more hardware processors, a three-dimensional (3D) reflectivity function of the target from the 2D FFT of the entire aperture array <u>312</u>

**FIG. 3**

FIG. 4A          FIG. 4B          FIG. 4C          FIG. 4D
                 (PRIOR          (PRIOR
                  ART)            ART)

Europäisches
Patentamt

European
Patent Office

Office européen
des brevets

# EUROPEAN SEARCH REPORT

**Application Number**

EP 24 19 7020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANIK MUHAMMET EMIN ET AL: "Near-Field MIMO-SAR Millimeter-Wave Imaging With Sparsely Sampled Aperture Data", IEEE ACCESS, vol. 7, 25 March 2019 (2019-03-25), pages 31801-31819, XP011715753, DOI: 10.1109/ACCESS.2019.2902859 [retrieved on 2019-03-20] * abstract; figures 1, 2, 4, 5, 8 * * page 31802, right-hand column, line 49 - page 31803, right-hand column, line 30 * * page 31805, right-hand column, lines 6-22 * * page 31806, left-hand column, line 16 - page 31807, left-hand column, line 10 * * page 31808, left-hand column, line 28 - page 31810, left-hand column, line 28 * * page 31812, left-hand column, lines 1-3 * | 1-15 | INV. G01S13/90 G01S13/38 G01S13/42 |
| X | LIU KANG ET AL: "MIMO-SAR Image Antialiasing for Cascaded mmWave Radar Sensor", 2023 IEEE RADAR CONFERENCE (RADARCONF23), IEEE, 1 May 2023 (2023-05-01), pages 1-6, XP034361100, DOI: 10.1109/RADARCONF2351548.2023.10149686 [retrieved on 2023-06-21] * abstract; figures 1, 4, 6, 7 * * page 3, right-hand column, line 6 - page 4, right-hand column, line 35 * | 1-15 | **TECHNICAL FIELDS SEARCHED (IPC)**<br><br>G01S |

The present search report has been drawn up for all claims

| Place of search | Date of completion of the search | Examiner |
|---|---|---|
| Munich | 21 January 2025 | Rodríguez González |

EPO FORM 1503 03.82 (P04C01)

**EP 4 535 039 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321066628